# EUROPÄISCHE PATENTSCHRIFT

(11) **EP 2 836 707 B1**
(45) Veröffentlichungstag und Bekanntmachung des Hinweises auf die Patenterteilung: **03.08.2016**
(21) Anmeldenummer: 13720860.9
(22) Anmeldetag: 25.04.2013
(51) Int. Cl.: F03D 80/70, F03D 15/20

(54) **WINDENERGIEANLAGE MIT AUSSENLÄUFERGENERATOR**
WIND TURBINE WITH AN OUTRUNNER GENERATOR
EOLIENNE AVEC UN GENERATEUR INVERSÉ DU TYPE OUTRUNNER

(30) Priorität: 18.05.2012 DE 102012208372
(43) Veröffentlichungstag der Anmeldung: 18.02.2015
(73) Patentinhaber: Siemens Aktiengesellschaft, 80333 München (DE)
(72) Erfinder: ELENDER, Gunther, 94081 Fürstenzell (DE); HARTMANN, Ulrich, 14197 Berlin (DE); JÖCKEL, Andreas, 90408 Nürnberg (DE); KERMAS, Daniel, 10317 Berlin (DE); MÖHLE, Axel, 12163 Berlin (DE); TROGISCH, Gordon, 15344 Strausberg (DE)
(86) Internationale Anmeldenummer: PCT/EP2013/058611
(87) Internationale Veröffentlichungsnummer: WO 2013/171051

(56) Entgegenhaltungen:
- EP-A2- 1 394 406
- EP-A2- 2 412 973
- WO-A1-01/21956
- WO-A1-2011/082836
- WO-A2-2011/058184
- DE-A1-102007 049 368
- US-A1- 2010 264 664

## Beschreibung

Die Erfindung betrifft eine Windenergieanlage mit einem Träger, welcher mit seiner Befestigungsseite über einen Turmkopf mit einem Turm der Windenergieanlage koppelbar ist, wobei ein elektrischer Generator zwischen einer Rotornabe einerseits und der Befestigungsseite des Trägers andererseits angeordnet ist.

Windenergieanlagen (auch unter der Bezeichnung "Windkraftanlagen" bekannt) sind bereits aus dem Stand der Technik in vielfältiger Ausgestaltung bekannt. Solche Anlagen dienen zur Bereitstellung von elektrischer Energie aus der kinetischen Energie des Windes. Eine Windkraftanlage beinhaltet einen Turm, welcher als Tragstruktur für die gesamte Anlage dient. Auf dem Turm sind die wesentlichen Komponenten der Anlage angeordnet, nämlich insbesondere ein elektrischer Generator, wie auch ein Rotor mit Rotorblättern. Während der Rotor zum Umwandeln der kinetischen Energie des Windes in eine Rotationsenergie dient, ist es Aufgabe des Generators, die Rotationsenergie in elektrische Energie umzuwandeln.

Es sind bereits Anlagen bekannt, bei denen der Rotor einerseits und der Generator andererseits an gegenüberliegenden Seiten des Turms angeordnet sind. Eine solche Ausgestaltung der Anlage hat insbesondere den Vorteil einer besseren Gewichtsverteilung der Massen des Trägers, des Rotors und des Generators. Zwar führt diese bessere Verteilung der Turmkopfmasse zu einer geringeren Materialbeanspruchung, jedoch ist diese Anordnung des Rotors einerseits und des Generators andererseits auch mit Nachteilen verbunden. Bei einer solchen Konstruktion muss man nämlich mit einem relativ hohen Gesamtgewicht bzw. mit einer hohen Turmkopfmasse rechnen, weil eine zusätzliche Welle zur Verbindung des Rotors einerseits mit dem Generator andererseits eingesetzt werden muss. Außerdem ist bei dieser Anordnung gegebenenfalls auch eine aufwändige Kupplung in die Zwischenwelle integriert, welche Drehbewegungen des Rotors an den Generator überträgt. Eine derartige Kupplung wird auch deshalb benötigt, um den Generator von Biegebewegungen des Rotors zumindest teilweise entkoppeln zu können.

Vorliegend richtet sich das Interesse auf eine Windkraftanlage, bei welcher der Generator und der Rotor auf derselben Seite des Turms angeordnet sind bzw. der Generator zwischen dem Rotor einerseits und dem Turm andererseits und somit auf der windzugewandten "Luvseite" der Anlage liegt. Diese Anordnung hat insbesondere Vorteile im Hinblick auf das Gesamtgewicht, sodass insgesamt eine gewichtsoptimierte Konstruktion bereitgestellt werden kann. Bei einer solchen Anordnung des Generators besteht eine besondere Herausforderung darin, einerseits Maßnahmen zu treffen, die eine zuverlässige Entkopplung von an dem Rotor auftretenden Biegemomenten von dem Generator gewährleisten, und andererseits auch die Anzahl der benötigen Lager auf ein Minimum zu reduzieren. Die genannten Biegemomente werden üblicherweise durch Windkräfte hervorgerufen, die an der Rotornabe aufgrund von unterschiedlichen Windverhältnissen an den Rotorblättern auftreten. Weil die Rotorblätter relativ lang sind und die Differenz in der Höhe, auf welcher sich die unterschiedlichen Rotorblätter befinden, entsprechend groß ist, treten nämlich an den Rotorblättern jeweils unterschiedliche Windgeschwindigkeiten und somit auch unterschiedliche Windkräfte auf. Diese unterschiedlichen Windkräfte bewirken dann eine Biegebewegung der Rotornabe, was bei manchen Systemen eine Veränderung des Luftspaltes, also des radialen Abstands zwischen dem Läufer einerseits und dem Stator des Generators andererseits zur Folge hat. Die Übertragung der Biegemomente auf den Generator und somit die Veränderung des Luftspalts des Generators können durch entsprechende Auslegung der Anlage und insbesondere durch entsprechende Lagerung der Rotornabe und des Generators verhindert werden. Wie bereits ausgeführt, besteht hier eine Herausforderung darin, die Anzahl der benötigten Lager so gering wie möglich zu halten.

Eine Windenergieanlage ist aus dem Dokument EP 2 412 973 A2 bekannt. In diesem Dokument sind verschiedene Ausführungen einer Windenergieanlage beschrieben, die sich in der Lagerung des Generators und der Rotornabe untereinander unterscheiden.

Eine Windenergieanlage mit einem gemeinsamen Lager, an welchem sowohl der Läufer eines Generators als auch die Rotornabe gelagert sind, ist aus dem Dokument US 2010/0264664 A1 bekannt.

Eine Windenergieanlage, bei welcher die Flügel des Windrotors auf dem Läufer eines Generators angeordnet sind, ist aus dem Dokument EP 1 394 406 A2 bekannt.

Weitere Windkraftanlagen sind aus den Dokumenten
DE 10 2007 049 368 A1, WO 2011/082836 A1 und WO 01/21956 A1 bekannt.

Es ist Aufgabe der Erfindung, eine Lösung aufzuzeigen, wie bei einer Windenergieanlage, bei welcher der Rotor und der Generator auf derselben Seite des Turms angeordnet sind, die Anzahl der benötigten Lager für die Lagerung der Rotornabe und des Generators auf ein Minimum reduziert und trotzdem eine zuverlässige Entkopplung der Biegemomente von dem Generator ermöglicht werden kann.

Diese Aufgabe wird durch eine Windenergieanlage mit den Merkmalen gemäß Patentanspruch 1 gelöst. Vorteilhafte Ausführungen der Windenergieanlage sind Gegenstand der abhängigen Patentansprüche, der Beschreibung und der Figuren.

Eine lösungsgemäße Windenergieanlage weist einen Träger auf, welcher mit seiner Befestigungsseite über einen Turmkopf mit einem Turm verbunden werden kann. Die Windenergieanlage hat auch eine Rotornabe, welche zum Tragen zumindest eines Rotorblatts ausgebildet ist, wie auch einen zwischen der Rotornabe und der Befestigungsseite des Trägers angeordneten elektrischen Generator, welcher als Außenläufer ausgebildet ist. Mit anderen Worten ist der Generator somit im aufgebauten Zustand der Anlage zwischen dem Rotor einerseits und dem Turm andererseits angeordnet. Ein Läufer des Generators und die Rotornabe sind an dem Träger drehbar gelagert, wobei die Windenergieanlage für die Rotornabe und den Läufer ein gemeinsames Lager aufweist, über welches sowohl die Rotornabe als auch der Läufer des Generators an dem Träger drehbar gelagert sind.

Insbesondere wird somit ein Lager verwendet, über welches sowohl die Rotornabe als auch der Läufer des Generators an dem Träger radial abgestützt sind, sodass dieses gemeinsame Lager im Wesentlichen in einem Verbindungsbereich zwischen der Rotornabe und dem Läufer des Generators angeordnet ist. Es kann vorgesehen sein, dass sowohl der Läufer als auch die Rotornabe an einem gemeinsamen äußeren Lagerring des gemeinsamen Lagers abgestützt und über diesen Lagerring gelagert sind.

Die Bereitstellung eines gemeinsamen Lagers hat insbesondere den Vorteil, dass die Anzahl der eingesetzten Lager auf ein Minimum reduziert werden kann. Weil solche Lager, wie sie bei Windkraftanlagen eingesetzt werden, relativ teuer sind, können somit einerseits Kosten bei der Windenergieanlage gespart werden. Andererseits kann auch der wertvolle Bauraum gespart werden, und das Turmkopfgewicht kann weiterhin optimiert werden. Dennoch kann bei der lösungsgemäßen Windenergieanlage die Übertragung der Biegemomente von der Rotornabe auf den Generator und folglich auch die Veränderung des Luftspalts zwischen dem Läufer und einem Stator des Generators verhindert werden. Die durch unterschiedliche Windverhältnisse an den Rotorblättern hervorgerufenen Biegemomente können nämlich überwiegend über das Lager sowie über den Träger aus dem System abgeleitet werden. Das geringe Turmkopfgewicht bietet wiederum Vorteile bei der Auslegung des Turms und des Fundaments selbst, was sich insbesondere bei so genannten Offshore-Windenergieanlagen als besonders vorteilhaft erweist.

Der genannte Träger stellt bevorzugt ein Achsenteil dar, welches eine Drehachse des Läufers des Generators und des Rotors der Windenergieanlage definiert. Der Läufer des Generators und gegebenenfalls auch die Rotornabe sind somit um den Träger herum drehbar gelagert. Der Träger selbst ist jedoch bezüglich des Stators des Generators ein ortsfestes Teil und kann gegebenenfalls lediglich in horizontaler Richtung um den Turm herum gedreht werden.

Vorzugsweise weist der als Außenläufer ausgebildete Generator einen Stator auf, welcher mit dem genannten Träger fest verbunden und somit durch den Träger gehalten ist. Der Läufer des Generators und die Rotornabe sind dabei bevorzugt direkt an dem Träger gelagert, was insbesondere den Vorteil hat, dass die Biegemomente direkt über den Träger und hierdurch über den Turmkopf in den Turm abgeleitet werden können.

Die Ausgestaltung des Generators als Außenläufer hat gegenüber Windkraftanlagen mit einem als Innenläufer ausgebildeten Generator insbesondere den Vorteil, dass bei nahezu gleichem Gewicht grundsätzlich höhere Generatorleistungen erreicht werden können. Die Ausführung des Generators als Außenläufer bedeutet dabei, dass der Läufer außenumfänglich um den Stator herum drehbar gelagert ist.

In einer Ausführungsform kann vorgesehen sein, dass unter Verzicht auf eine Zwischenwelle der Läufer des Generators direkt mit der Rotornabe drehstarr und gegebenenfalls biegeweich verbunden ist. Durch eine derartige direkte Anbindung der Rotornabe an den Läufer des Generators gelingt es, eine optimale Übertragung der Kräfte von der Rotornabe auf den Generator zu erreichen und außerdem auch eine gewichtsoptimierte Konstruktion zu schaffen. Durch die Verringerung der Turmkopfmasse können - wie bereits ausgeführt - Vorteile hinsichtlich der Auslegung des Turms sowie des Fundaments erzielt werden.

Diese Vorteile kommen insbesondere dann vollständig zum Tragen, wenn die Rotornabe und der Läufer direkt über jeweilige axiale Stirnseiten miteinander verbunden sind, und gegebenenfalls unter Vermittlung eines speziellen Übertragungselements, nämlich einer drehsteifen Feder.

Das gemeinsame Lager ist als Momentenlager ausgebildet. Um nämlich eine besonders steife Lagerung der beiden Komponenten Läufer und Rotornabe zu ermöglichen, wird ein so genanntes Momentenlager bzw. ein zweireihiges Lager eingesetzt, sodass die Rotornabe einerseits und der Läufer des Generators andererseits über dieses gemeinsame Momentenlager an dem Träger gelagert sind. Das Lager kann dabei beispielsweise ein Rillenkugellager, ein Zylinderrollenlager oder aber als Kegelrollenlager sein. Das zweireihige Lager ermöglicht eine besonders steife Lagerung der Rotornabe und des Läufers an dem Träger, sodass die oben genannten Biegemomente zuverlässig aus dem System abgeleitet werden können.

Also beinhaltet die Windenergieanlage ein gemeinsames Lager, über welches sowohl die Rotornabe als auch der Läufer an dem Träger gelagert sind. Hinsichtlich der weiteren Lagerung des Läufers und der Rotornabe können nun verschiedenste Ausführungsformen vorgesehen sein:
Für den Läufer ist ein zusätzliches Lager bereitgestellt, über welches der Läufer zusätzlich zu dem gemeinsamen Lager an dem Träger gelagert ist. Somit ist der Läufer des Generators einerseits über das gemeinsame Lager und andererseits über dieses zusätzliche Lager an dem Träger gelagert. Das zusätzliche Lager verringert dann die Verformungen des Luftspalts zwischen dem Läufer und dem Stator des Generators auf ein Minimum. In vorteilhafter Weise kann dieses zusätzliche Lager beispielsweise als Stützlager und gegebenenfalls auch segmentiert ausgeführt werden. Es kann beispielsweise mehrere Rollen - beispielsweise fünf Rollen - beinhalten, über welche der Läufer in einer Laufbahn des Trägers abgestützt ist.

Die Rotornabe könnte ausschließlich über das gemeinsame Lager an dem Träger gelagert sein. Somit ist die Anzahl der eingesetzten Lager minimal, und es kann eine kostenoptimierte Windenergieanlage bereitgestellt werden. Bei dieser Ausführungsform kann auch vorgesehen sein, dass sich der Träger in axialer Richtung im Wesentlichen nur bis hin zu einer dem Generator zugewandten axialen Stirnseite der Rotornabe erstreckt. Auf diesem Wege gelingt es, das Material für den Träger einzusparen und das Gewicht weiterhin zu optimieren. Um bei dieser Lagerung der Rotornabe eine zuverlässige Abstützung und Halterung selbiger Nabe zu gewährleisten, kann hier die Rotornabe über ein spezielles Verbindungsteil bzw. Übertragungselement mit dem Läufer des Generators verbunden sein. Zum Beispiel kann für diese Verbindung eine drehsteife Feder eingesetzt werden, welche die Rotornabe einerseits mit dem Läufer andererseits drehstarr koppelt.

Die Windenergieanlage ist jedoch so ausgebildet, dass sich der Träger in axialer Richtung zumindest über einen überwiegenden axialen Längenbereich der Rotornabe - und insbesondere über die gesamte axiale Länge selbiger Nabe - erstreckt. Dann kann die Windenergieanlage für die Rotornabe ebenfalls ein zusätzliches Lager aufweisen, über welches die Rotornabe zusätzlich zu dem gemeinsamen Lager an dem Träger gelagert ist. Bei dieser Ausführungsform ist die Rotornabe somit einerseits über das gemeinsame Lager und andererseits über das zusätzliche, ausschließlich für die Rotornabe vorgesehene Lager an dem Träger abgestützt und gelagert. Diese Ausführungsform ermöglicht eine noch steifere und zuverlässigere Lagerung der Rotornabe und somit auch eine noch bessere Ableitung der Biegemomente über den Träger in den Turm.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nachfolgend anhand einzelner bevorzugter Ausführungsbeispiele sowie unter Bezugnahme auf die beigefügten Zeichnungen näher erläutert. Es sei an dieser Stelle betont, dass die nachfolgend beschriebenen Ausführungsbeispiele lediglich bevorzugte Ausführungsformen der Erfindung darstellen und die Erfindung somit nicht auf diese beispielhaften Ausführungsformen beschränkt ist. Es zeigen:
- FIG 1 in: schematischer Darstellung eine Schnittansicht einer Windenergieanlage nach bekannter Banweise; und
- FIG 2: in schematischer Darstellung eine Schnittansicht einer Windenergieanlage gemäß einer zweiten Ausführungsform der Erfindung.

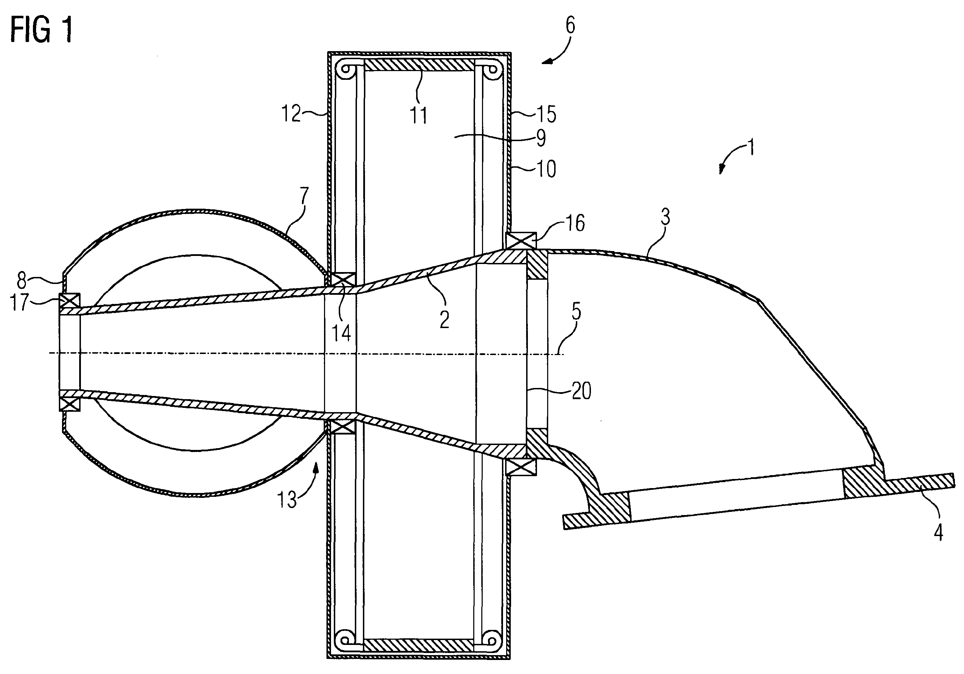

Eine in FIG 1 in schematischer Darstellung gezeigte Windenergieanlage 1 weist einen Träger 2 auf, welcher mit seiner Befestigungsseite 20 mit einem Turmkopf 3 und über diesen Turmkopf 3 mit einem in FIG 1 nicht näher dargestellten Turm verbunden ist. Beispielsweise kann der Turmkopf 3 über eine Flanschverbindung 4 mit dem Turm verbunden werden. Der Turmkopf 3 kann dann in horizontaler Richtung um eine im Wesentlichen vertikal verlaufende Drehachse drehbar an dem Turm gelagert sein.

Der Träger 2 ist ein rotationssymmetrischer Körper mit einer Symmetrieachse 5, welche gleichzeitig auch eine Drehachse eines elektrischen Generators 6 und einer Rotornabe 7 der Windenergieanlage 1 darstellt. Der Träger 2 ist außerdem in Richtung von dem Turmkopf 3 weg verjüngt ausgebildet. Dies bedeutet, dass sich der Durchmesser des Trägers 2 von dem Turmkopf 3 bis hin zu einem von dem Generator 6 abgewandten axialen Ende 8 der Rotornabe 7 kontinuierlich verringert.

Der Träger 2 trägt sowohl die Rotornabe 7 als auch den Generator 6. Ein Stator 9 des Generators 6 ist dabei mit dem Träger 2 fest verbunden. Der Generator 6 ist als Außenläufer ausgebildet, sodass ein Läufer 10 des Generators 6 um den Stator 9 herum drehbar gelagert ist. An dem Stator 9 ist eine elektrische Statorwicklung 11 bereitgestellt, während der Läufer 10 beispielsweise in FIG 1 nicht dargestellte Permanentmagnete trägt. In einer Ausführungsform ist der Generator 6 somit eine permanentmagneterregte Synchronmaschine.

Die Rotornabe 7 dient zum Tragen von in den Figuren nicht näher dargestellten Rotorblättern. Die Rotornabe 7 bildet zusammen mit diesen Rotorblättern einen Rotor der Windenergieanlage 1, welcher die Aufgabe hat, die kinetische Energie des Windes in Rotationsenergie des Läufers 10 umzuwandeln. Der Generator 6 wiederum stellt aus dieser Rotationsenergie elektrische Energie bereit, die dann mithilfe von Stromrichtern abgegriffen und beispielsweise in Kondensatoren abgespeichert oder aber in das elektrische Versorgungsnetz eingespeist werden kann.

Der Träger 2 erstreckt sich im Ausführungsbeispiel gemäß FIG 1 von einem dem Turmkopf 3 zugewandten axialen Ende des Generators 6 bis hin zu dem vom Generator 6 abgewandten axialen Ende 8 der Rotornabe 7. Somit erstreckt sich der Träger 2 in axialer Richtung über die gesamte axiale Länge der Rotornabe 7 und des Generators 6, und zwar teilweise auch innerhalb selbiger Rotornabe 7.

Der Läufer 10 umschließt den Stator 9 nicht nur außenumfänglich, sondern auch auf den beiden axialen Seiten des Stators 9. Ein von dem Turmkopf 3 abgewandtes Lagerschild 12 des Läufers 10 ist mit der Rotornabe 7 direkt verbunden, nämlich beispielsweise über eine Flanschverbindung 13 oder dergleichen. Sowohl der Läufer 10 als auch die Rotornabe 7 sind dabei über ein gemeinsames Lager 14 an dem Träger 2 drehbar gelagert und können somit um den Träger 2 herum um seine Symmetrieachse 5 gedreht werden. Das Lager 14 dient folglich sowohl zur Lagerung des Läufers 10 als auch zur Lagerung der Rotornabe 7 an dem Trägerteil 2. Dieses gemeinsame Lager 14 kann grundsätzlich ein beliebiges Wälzlager sein und ist in einer Ausführungsform beispielsweise ein zweireihiges Kegelrollenlager - ein so genanntes Momentenlager. Somit wird eine besonders steife Lagerung der beiden Komponenten Rotornabe 7 und Läufer 10 an dem Trägerteil 2 gewährleistet, weil der Druck über eine relativ große axiale Länge des Lagers 14 verteilt werden kann.

Andererseits ist der Läufer 10 mit seinem dem Turmkopf 3 zugewandten Lagerschild 15 über ein zusätzliches Lager 16 an dem Träger 2 gelagert. Dieses zusätzliche Lager 16 dient also ausschließlich zur Lagerung des Läufers 10 direkt an dem Träger 2. Das Lager 16 kann beispielsweise als so genanntes Stützlager ausgebildet sein. Es kann auch segmentiert ausgeführt sein; der Läufer 10 kann beispielsweise über mehrere Rollen des Lagers 16 in einer Laufbahn abgestützt sein.

Auch für die Rotornabe 7 ist im Ausführungsbeispiel gemäß FIG 1 ein zusätzliches Lager 17 bereitgestellt, über welches die Rotornabe 7 zusätzlich zu dem gemeinsamen Lager 14 an dem Träger 2 gelagert ist. Das Lager 17 kann als Wälzlager ausgebildet sein. Während sich das gemeinsame Lager 14 an einem dem Generator 6 zugewandten axialen Ende der Rotornabe 7 und somit im Bereich der Flanschverbindung 13 zwischen der Rotornabe 7 und dem Läufer 10 befindet, ist das zusätzliche Lager 17 an dem gegenüberliegenden axialen Ende 8 der Rotornabe 7 angeordnet.

Im Ausführungsbeispiel gemäß FIG 1 sind somit insgesamt drei separate Lager 14, 16, 17 bereitgestellt, über welche der Läufer 10 und die Rotornabe 7 an dem Träger 2 direkt gelagert sind. Eine solche Lösung hat insbesondere den Vorteil, dass die aufgrund von verschiedenen Windverhältnissen an den Rotorblättern auftretenden Biegemomente über den Träger 2 in den Turm besonders gut abgeleitet werden können. Somit werden diese Biegemomente nicht auf den Generator 6 übertragen, sodass es auch im Wesentlichen zu keiner Verformung des Luftspalts zwischen dem Läufer 10 einerseits und dem Rotor 9 andererseits kommt. Folglich wird auch die Leistung des Generators 6 nicht beeinflusst.

Eine solche Windenergieanlage 1, wie sie in FIG 1 dargestellt ist, hat aufgrund der direkten Verbindung zwischen dem Läufer 10 und der Rotornabe 7 weiterhin den Vorteil, dass eine optimale Übertragung der Kräfte gewährleistet ist. Diese direkte Verbindung, bei welcher keine Zwischenwelle zwischen der Rotornabe 7 und dem Läufer 10 benötigt wird, ermöglicht auch eine Optimierung des Gesamtgewichts der Anlage 1, sodass die in FIG 1 gezeigte Konstruktion auch Vorteile bei der Auslegung bzw. Bemessung des Turms und des Fundaments für die Windenergieanlage 1 bietet. Deshalb kann die Windenergieanlage 1 besonders gut als so genannte Offshore-Anlage Verwendung finden.

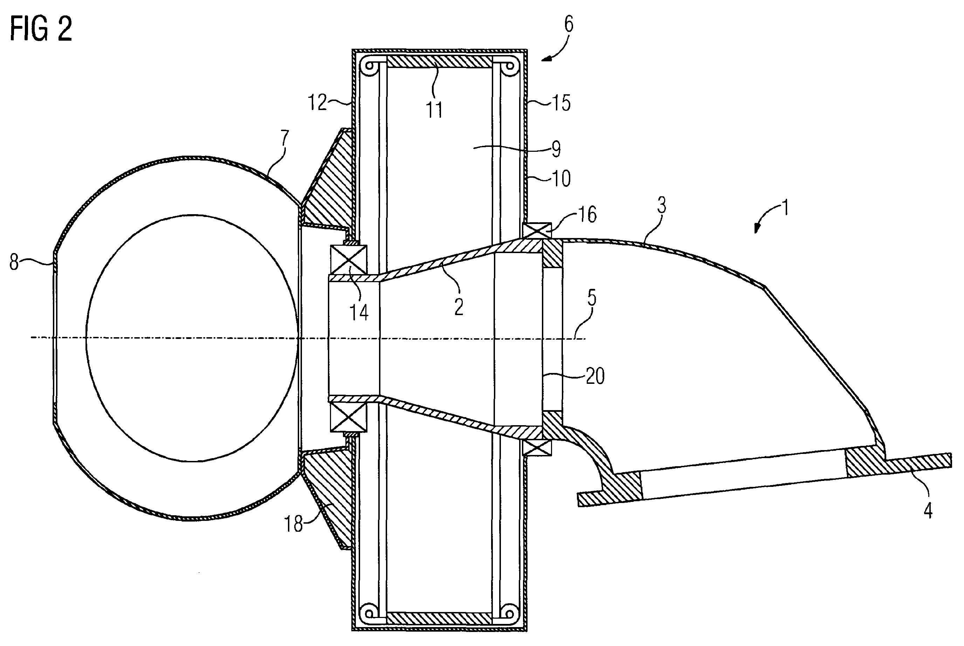

In FIG 2 ist eine Windenergieanlage 1 gemäß einer zweiten Ausführungsform der Erfindung dargestellt. Nachfolgend werden die Unterschiede der Windenergieanlage 1 gemäß FIG 2 zu der in FIG 1 dargestellten Windenergieanlage 1 erläutert:
Im Ausführungsbeispiel gemäß FIG 2 erstreckt sich der Träger 2 in axialer Richtung im Wesentlichen nur bis hin zu einem dem Generator 6 zugewandten axialen Ende der Rotornabe 7. Es ergibt sich somit einerseits eine Materialersparnis sowie eine weitere Gewichtsreduktion; andererseits wird hier auch auf das zusätzliche Lager 17 für die Lagerung der Rotornabe 7 verzichtet. Dies bedeutet, dass die Rotornabe 7 hier ausschließlich über das gemeinsame Lager 14 an dem Träger 2 gelagert ist. Das gemeinsame Lager 14 ist im vorliegenden Ausführungsbeispiel in vorteilhafter Weise als zweireihiges und somit besonders steifes Lager ausgeführt, nämlich ein Momentenlager. Die Anzahl der benötigten Lager ist folglich auf ein Minimum reduziert, denn der Läufer 10 sowie die Rotornabe 7 sind insgesamt über zwei Lager 14, 16 gelagert.

Das zusätzliche Lager 16 limitiert die Luftspaltverformungen und kann beispielsweise als Stützlager und gegebenenfalls auch segmentiert ausgeführt werden.

Das Gewicht der in FIG 2 dargestellten Windenergieanlage ist somit insgesamt minimal, was sich insbesondere im Hinblick auf eine Offshore-Anwendung sowie andererseits auch hinsichtlich der Kosten als besonders vorteilhaft erweist.

Um eine wirkungsvolle Kraftübertragung von der Rotornabe 7 auf den Läufer 10 zu ermöglichen, ist im Ausführungsbeispiel gemäß FIG 2 der Rotornabe 7 ein drehsteifes Übertragungselement 18 zugeordnet, über welches die Rotornabe 7 mit dem Läufer 10 verbunden und gelagert ist. Dieses Übertragungselement 18 ist in Form einer drehsteifen Feder bereitgestellt.

## Patentansprüche

1. Windenergieanlage (1) mit:
- einem Träger (2), welcher mit seiner Befestigungsseite (20) über einen Turmkopf (3) mit einem Turm koppelbar ist,
- einer Rotornabe (7) zum Tragen zumindest eines Rotorblatts und
- einem zwischen der Rotornabe (7) und der Befestigungsseite (20) des Trägers (2) angeordneten elektrischen Generator (6), welcher als Außenläufer ausgebildet ist,
- wobei ein Läufer (10) des Generators (6) und die Rotornabe (7) an dem Träger (2) drehbar gelagert sind,
- und wobei die Windenergieanlage (1) für die Rotornabe (7) und den Läufer (10) ein gemeinsames Lager (14) aufweist, über welches sowohl die Rotornabe (7) als auch der Läufer (10) des Generators (6) an dem Träger (2) drehbar gelagert sind,
**dadurch gekennzeichnet, dass**
- unter Verzicht auf eine Zwischenwelle der Läufer (10) mit der Rotornabe (7) drehstarr unter Vermittlung einer drehsteifen Feder verbunden ist.

2. Windenergieanlage (1) nach Anspruch 1, **dadurch gekennzeichnet, dass** über jeweilige axiale Stirnseiten die Rotornabe (7) und der Läufer (10) miteinander verbunden sind.

3. Windenergieanlage (1) nach einem der vorhergehenden Ansprüche, **dadurch gekennzeichnet, dass** das gemeinsame Lager (14) als Wälzlager, insbesondere als Momentenlager, ausgebildet ist.

4. Windenergieanlage (1) nach einem der vorhergehenden Ansprüche, **dadurch gekennzeichnet, dass** für den Läufer (10) ein zusätzliches Lager (16) bereitgestellt ist, über welches der Läufer (10) zusätzlich zu dem gemeinsamen Lager (14) an dem Träger (2) gelagert ist.

5. Windenergieanlage (1) nach einem der vorhergehenden Ansprüche, **dadurch gekennzeichnet, dass** die Rotornabe (7) ausschließlich über das gemeinsame Lager (14) an dem Träger (2) gelagert ist.

6. Windenergieanlage (1) nach Anspruch 5, **dadurch gekennzeichnet, dass** sich der Träger (2) in axialer Richtung nur bis hin zu einer dem Generator (6) zugewandten axialen Stirnseite der Rotornabe (7) erstreckt.

7. Windenergieanlage (1) nach einem der Ansprüche 1 bis 4, **dadurch gekennzeichnet, dass** sich der Träger (2) in axialer Richtung zumindest über einen überwiegenden axialen Längenbereich der Rotornabe (7) erstreckt und für die Rotornabe (7) ein zusätzliches Lager (17) bereitgestellt ist, über welches die Rotornabe (7) zusätzlich zu dem gemeinsamen Lager (14) an dem Träger (2) gelagert ist.

## Claims

1. Wind turbine (1) having:
- a carrier (2) which with its fastening side (20) can be coupled to a tower via a tower head (3),
- a rotor hub (7) for bearing at least one rotor blade, and
- an electric generator (6) which is arranged between the rotor hub (7) and the fastening side (20) of the carrier (2) and which is designed as an outrunner,
- wherein a rotor (10) of the generator (6) and the rotor hub (7) are rotatably mounted on the carrier (2),
- and wherein the wind turbine (1) has a common bearing (14) for the rotor hub (7) and the rotor (10), via which both the rotor hub (7) and the rotor (10) of the generator (6) are rotatably mounted on the carrier (2),
**characterised in that**
- without recourse to an intermediate shaft the rotor (10) is connected to the rotor hub (7) in a torsionally stiff manner by way of a torsionally rigid spring.

2. Wind turbine (1) according to claim 1, **characterised in that** the rotor hub (7) and the rotor (10) are connected to one another by way of respective axial end faces.

3. Wind turbine (1) according to one of the preceding claims, **characterised in that** the joint bearing (14) is designed as a roller bearing, in particular as a moment bearing.

4. Wind turbine (1) according to one of the preceding claims, **characterised in that** an additional bearing (16) is provided for the rotor (10), via which the rotor (10) is mounted on the carrier (2) in addition to the common bearing (14).

5. Wind turbine (1) according to one of the preceding claims, **characterised in that** the rotor hub (7) is exclusively mounted on the carrier (2) via the common bearing (14).

6. Wind turbine (1) according to claim 5, **characterised in that** the carrier (2) extends in the axial direction only as far as an axial end face of the rotor hub (7) facing the generator (6).

7. Wind turbine (1) according to one of claims 1 to 4, **characterised in that** the carrier (2) extends in the axial direction at least over a predominant axial length region of the rotor hub (7) and an additional bearing (17) is provided for the rotor hub (7), via which additional bearing (17) the rotor hub (7) is mounted on the carrier (2) in addition to the common bearing (14).

## Revendications

1. Eolienne (1) comprenant :
- un support (2) qui peut, par son côté (20) de fixation, être accouplé à une tour par une tête (3) de tour,
- un moyeu (7) de rotor pour porter au moins une lame de rotor et
- une génératrice (6) électrique qui est montée entre le moyeu (7) du rotor et le côté (20) de fixation du support (2) et de type outrunner,
- dans laquelle un induit (10) de la génératrice (6) et le moyeu (7) du rotor sont montés tournant sur le support (2),
- et dans laquelle l'éolienne (1) a pour le moyeu (7) du rotor et l'induit (10) un palier (14) commun, par lequel à la fois le moyeu (7) du rotor et l'induit (10) de la génératrice (6) sont montés tournant sur le support (2), **caractérisée en ce que**
- en renonçant à un arbre intermédiaire, l'induit (10) est relié au moyeu (7) du rotor d'une manière rigide en rotation par l'intermédiaire d'un ressort raide en rotation.

2. Eolienne (1) suivant la revendication 1, **caractérisée en ce que** le moyeu (7) du rotor et l'induit (10) sont reliés entre eux par des côtés frontaux axiaux respectifs.

3. Eolienne (1) suivant l'une des revendications précédentes, **caractérisée en ce que** le palier (14) commun est sous la forme d'un palier à roulement, notamment d'un palier instantané.

4. Eolienne (1) suivant l'une des revendications précédentes, **caractérisée en ce qu'**il est mis à disposition de l'induit (10) un palier (16) supplémentaire par lequel le rotor (10) est monté sur le support supplémentairement au palier (14) commun.

5. Eolienne (1) suivant l'une des revendications précédentes, **caractérisée en ce que** le moyeu (7) du rotor est monté sur le support (2) exclusivement par le palier (14) commun.

6. Eolienne (1) suivant la revendication 5, **caractérisée en ce que** le support (2) ne s'étend dans la direction axiale que jusqu'à un côté frontal axial tourné vers la génératrice (6) du moyeu (7) du rotor.

7. Eolienne (1) suivant l'une des revendications 1 à 4, **caractérisée en ce que** le support (2) s'étend dans la direction axiale au moins sur une partie prépondérante de la longueur axiale du moyeu (7) du rotor et il est mis à disposition du moyeu (7) du rotor un palier (17) supplémentaire par lequel le moyeu (7) du rotor est monté sur le support (2) supplémentairement au palier (14) commun.
